# FASCICULE DE BREVET EUROPEEN

(11) **EP 3 530 508 B1**
(45) Date de publication et mention de la délivrance du brevet: **14.10.2020**
(21) Numéro de dépôt: 19156580.3
(22) Date de dépôt: 12.02.2019
(51) Int. Cl.: B60J 10/00, B60Q 1/32, B60J 10/36, B60J 10/86, B61D 19/02, B61D 29/00

(54) **ENSEMBLE DE SIGNALISATION POUR VANTAIL, PORTE ET VEHICULE DE TRANSPORT CORRESPONDANTS**
SIGNALISIERUNGSEINHEIT FÜR FLÜGEL, ENTSPRECHENDE TÜR UND ENTSPRECHENDES TRANSPORTFAHRZEUG
SIGNALLING ASSEMBLY FOR A DOOR LEAF, CORRESPONDING DOOR AND TRANSPORT VEHICLE

(30) Priorité: 22.02.2018 FR 1851501
(43) Date de publication de la demande: 28.08.2019
(73) Titulaire: Faiveley Transport Tours, 37701 Saint-Pierre-des-Corps (FR)
(72) Inventeur: SALLES, Olivier, 35133 LECOUSSE (FR); VAUTIER, Fabien, 37270 VERETZ (FR)
(74) Mandataire: Schmidt, Martin Peter

(56) Documents cités:
- EP-A1- 3 186 126
- EP-A1- 3 409 557
- WO-A1-2018/219694
- DE-A1-102015 112 041
- DE-U- 1 982 028
- US-A- 4 051 336

## Description

### Domaine technique de l'invention

La présente invention concerne le domaine des portes d'accès à un véhicule de transport. Ces portes d'accès peuvent tout d'abord désigner des portes appartenant à des véhicules de transport, notamment de type train, tramway, métro, trolleybus ou encore bus. Au sens de l'invention, ces portes d'accès désignent également des portes dites palières, encore dénommées façades de quai.

Le document EP 3 186 126 A1 divulgue un ouvrant de véhicule, notamment ferroviaire.

L'invention vise plus spécifiquement un vantail appartenant à une telle porte d'accès, qui comprend des moyens permettant de signaler, à l'attention des voyageurs, des informations relatives à l'état d'ouverture et/ou de fermeture de cette porte. L'invention concerne notamment un vantail de porte coulissante, mais trouve également son application à d'autres types de vantaux, notamment ceux équipant des portes de type louvoyante coulissante. L'invention vise des portes qui peuvent être équipées, soit d'un unique vantail, soit de deux vantaux.

### Etat de la technique

Lors de l'arrêt d'un véhicule de transport, les portes de celui-ci s'ouvrent puis se ferment de manière à permettre aux passagers de monter dans ce véhicule, ou bien d'en descendre. Dans le cas où le quai est équipé de portes palières, ces dernières font également l'objet d'ouvertures et de fermetures. Pendant ces opérations, des incidents sont susceptibles de se produire. On citera notamment la possibilité de coincement d'un passager, d'un objet ou d'un animal, ou bien un problème d'ordre technique empêchant le déplacement normal de cette porte.

On conçoit que ces incidents sont préjudiciables à un service normal du véhicule, pour plusieurs raisons. Ainsi, ils sont susceptibles d'endommager les objets coincés par la porte. Par ailleurs, de façon plus critique, ils peuvent causer des blessures aux voyageurs, entraînant la responsabilité de la société de transport. Enfin, ces incidents sont de nature à induire un retard significatif du véhicule.

Afin d'éviter dans la mesure du possible ce type d'incidents, on a proposé d'équiper les portes avec des moyens de signalisation lumineux. De façon typique, ces derniers ont pour but de fournir aux passagers des informations, relatives à l'état d'ouverture de la porte. Il peut en particulier être indiqué si la porte se trouve en cours de fermeture, en cours d'ouverture, ou encore si elle est condamnée. De la sorte, la sécurité des voyageurs est préservée, tout en réduisant le risque de retard du véhicule.

De manière constructive, on connaît tout d'abord une solution consistant à placer ces moyens de signalisation sur les organes de manœuvre des portes, tels que leur bouton-poussoir. Cette première solution présente cependant certains inconvénients. En effet, la surface éclairée est relativement faible, ce qui rend l'information difficilement perceptible par les utilisateurs.

On a également proposé d'utiliser des diodes électroluminescentes (ou DEL), encore connues sous l'abréviation LED (Light Emitting Diode). Une première solution, connue par le document Knorr Bremse WO 2011/138292, prévoit de fixer ces diodes directement sur la face extérieure du vantail de porte. Cependant, l'information délivrée par ses diodes est alors sensiblement invisible de l'intérieur, lorsque la porte est ouverte. Par ailleurs, cette solution implique une modification significative de la structure du vantail, de sorte qu'elle ne peut pas être appliquée de manière simple sur des véhicules existants.

De manière générale le montage d'un joint par encliquetage, sur un vantail de porte d'accès à un véhicule de transport, est préjudiciable à l'intégrité physique des opérateurs. Ainsi, étant donné que cet encliquetage doit résister au vandalisme, il doit être réalisé à ajustement serré. En pratique, cela nécessite d'insérer le joint en le frappant avec un maillet, ce qui génère des troubles musculo-squelettiques (TMS), tels que des tendinites, chez les opérateurs.

Compte tenu de ce qui précède, un objectif de la présente invention est de remédier, au moins partiellement, aux inconvénients de l'art antérieur évoqués ci-dessus.

Un autre objectif de l'invention est de réaliser une signalisation lumineuse d'intensité satisfaisante, afin tout d'abord qu'elle soit aisément visible par les utilisateurs, que ces derniers se trouvent à l'intérieur ou à l'extérieur du véhicule.

Un autre objectif de l'invention est de réaliser une signalisation lumineuse qui puisse être perçue de manière satisfaisante par les utilisateurs dans toutes les conditions d'exposition, en particulier lorsque la porte se trouve en extérieur, notamment en plein soleil.

Un autre objectif de l'invention est de proposer un ensemble de signalisation lumineuse qui peut être monté sur le vantail de façon commode, en particulier moyennant un effort physique relativement peu important.

Un autre objectif de l'invention est de proposer un tel ensemble de signalisation qui peut être maintenu de façon fiable sur un vantail de porte, même en cas d'actes de vandalisme.

Un autre objectif de l'invention est de proposer un tel ensemble de signalisation, dont la maintenance est facilitée par rapport à l'art antérieur.

Un autre objectif de l'invention est de proposer un tel ensemble de signalisation, dont la structure mécanique est relativement simple.

### Objets de l'invention

Selon l'invention, au moins un des objectifs ci-dessus est atteint au moyen d'un ensemble de signalisation (2, 3, 4) pour un vantail (60, 70) de porte (50) d'accès à un véhicule de transport, notamment ferroviaire, ledit vantail comportant un corps et un profilé (1, 1') s'étendant sur au moins une partie de la périphérie de ce corps, ledit profilé définissant un logement (14) ouvert à l'opposé dudit corps,
ledit ensemble de signalisation comprenant
- un joint (2), lequel joint comporte une région d'accrochage (21), destinée à être reçue au moins en partie dans ledit logement dudit profilé, ainsi qu'une région d'éclairage (20),
- des moyens d'éclairage (4), propres à éclairer ladite région d'éclairage dudit joint, de façon à émettre au moins un signal visuel, en particulier représentatif de l'état d'ouverture et/ou de fermeture de la porte,
caractérisé en ce que :
ledit ensemble comprend en outre au moins une clé de verrouillage (3) reçue au moins en partie dans un volume intérieur (28) dudit joint, ladite clé étant propre à empêcher un arrachement dudit joint hors dudit profilé selon une direction transversale (Y1-Y1), en référence à la direction principale dudit joint, les moyens d'éclairage (4) étant fixés sur ladite clé de verrouillage.

Selon d'autres caractéristiques de l'ensemble de signalisation conforme à l'invention :
a) ledit volume intérieur (28) est bordé par des faces appartenant respectivement à la région d'accrochage et à la région d'éclairage, lesdits moyens d'éclairage (4) étant tournés vers la face (20') de la région d'éclairage.
b) lesdits moyens d'éclairage comprennent au moins un organe d'éclairage (4), lequel comprend un support (40) et des éléments d'éclairage (42) portés par ce support (40).
c) lesdits éléments d'éclairage sont de type diodes électroluminescentes.
d) le support (40) de l'organe de d'éclairage est de forme allongée et, de préférence, présente des dimensions longitudinales voisines de celles de la clé de verrouillage (3).
e) cet ensemble comprend des moyens de fixation, permettant la fixation des moyens d'éclairage sur ladite clé de verrouillage.
f) lesdits moyens de fixation comprennent des moyens de fixation amovible, notamment par vissage.
g) lesdits moyens de fixation comprennent des moyens de fixation par collage.
h) lesdits moyens de fixation comprennent des moyens de fixation par coopération de formes, notamment une glissière (39) dont est équipée la clé, présentant des rebords (38) de retenue de l'organe d'éclairage (4).
i) une partie (36) de ladite clé de verrouillage (3) fait saillie en dehors du volume intérieur (28), de manière à venir en contact direct avec ledit profilé (1).
j) ladite clé de verrouillage comprend un pied (30) et une tige (34) logés dans le volume intérieur, ainsi qu'une tête (35) faisant saillie en dehors du volume intérieur, de manière à venir en contact direct avec ledit profilé (1).
k) ladite partie (36) en saillie en dehors du volume intérieur (28), notamment ladite tête (35), est propre à venir en contact direct avec des arêtes (16, 17) s'étendant à partir des ailes dudit profilé (1).
l) ladite partie (435) en saillie en dehors du volume intérieur (428), notamment ladite tête (435), est propre à venir en contact direct avec des parois d'un capot (410'), s'étendant à partir d'une âme (410) dudit profilé (401).
m) la distance entre la paroi (620') de la région d'éclairage (620), bordant le volume intercalaire (628), et les éléments d'éclairage (642) diminue, depuis la région médiane de cette paroi vers ses zones latérales, de manière à répartir les chocs exercés, selon le plan principal du vantail, en direction desdites zones latérales.
n) les moyens d'éclairage (4) sont intégrés dans le volume global, formé par le vantail (60) et le joint (2), de manière à protéger les moyens d'éclairage (4) à l'égard de chocs, exercés selon un axe perpendiculaire au plan principal (P60) du vantail.

Ces caractéristiques additionnelles peuvent être mises en œuvre avec l'objet principal ci-dessus, individuellement ou en combinaisons quelconques, techniquement compatibles.

L'invention a également pour objet un ensemble d'étanchéité (2, 3) pour un vantail (60, 70) de porte (50) d'accès à un véhicule de transport, notamment ferroviaire, ledit vantail comportant un corps et un profilé (1, 1') s'étendant sur au moins une partie de la périphérie de ce corps, ledit profilé définissant un logement (14) ouvert à l'opposé dudit corps,
ledit ensemble d'étanchéité comprenant
- un joint (2), lequel joint comporte une région d'accrochage (21), destinée à être reçue au moins en partie dans ledit logement dudit profilé,
- au moins une clé de verrouillage (3) reçue en partie dans un volume intérieur (28) dudit joint, ladite clé étant propre à empêcher un arrachement dudit joint hors dudit profilé selon une direction transversale (Y1-Y1), en référence à la direction principale dudit joint, ladite clé présentant une région dite de butée (36), située en dehors dudit volume intérieur (28), ladite région de butée étant propre à venir en contact direct avec ledit profilé.

Cet ensemble d'étanchéité peut comprendre tout ou partie des caractéristiques additionnelles a) à n) mentionnées ci-dessus, individuellement ou en combinaisons quelconques, techniquement compatibles.

L'invention a également pour objet un procédé de montage d'un ensemble de signalisation tel que défini ci-dessus et/ou d'un ensemble d'étanchéité tel que défini ci-dessus, caractérisé en ce qu'il comporte une étape d'insertion transversale de la région d'accrochage du joint dans le logement du profilé, puis une étape d'introduction longitudinale de la clé de verrouillage dans le volume intérieur dudit joint.

L'invention a également pour objet un procédé de démontage d'un ensemble de signalisation tel que défini ci-dessus et/ou d'un ensemble d'étanchéité tel que défini ci-dessus, caractérisé en ce qu'il comporte une étape de retrait longitudinal de la clé de verrouillage hors du volume intérieur du joint, puis une étape d'extraction du joint hors du profilé rigide, de préférence selon une direction transversale.

L'invention a également pour objet un vantail (60, 70) de porte d'accès à un véhicule de transport, notamment ferroviaire, comprenant un corps (62, 72) et un cadre (66, 76) s'étendant sur au moins une partie de la périphérie dudit corps, ledit cadre comprenant au moins un profilé (1, 1') définissant un logement (14) ouvert à l'opposé dudit corps, ledit vantail comprenant en outre au moins un ensemble de signalisation tel que défini ci-dessus, la région d'accrochage (21) du joint étant reçue au moins en partie dans ledit logement.

L'invention a également pour objet un vantail (60, 70) de porte d'accès à un véhicule de transport, notamment ferroviaire, comprenant un corps (62, 72) et un cadre (66, 76) s'étendant sur au moins une partie de la périphérie dudit corps, ledit cadre comprenant au moins un profilé (1, 1') définissant un logement (14) ouvert à l'opposé dudit corps, ledit vantail comprenant en outre au moins un ensemble d'étanchéité tel que défini ci-dessus, la région d'accrochage (21) du joint étant reçue au moins en partie dans ledit logement.

L'invention a également pour objet une porte d'accès à un véhicule de transport, notamment du type train, tramway, métro ou encore trolleybus ou bus, en particulier porte dudit véhicule de transport, ou bien porte palière pour quai d'arrêt dudit véhicule de transport, ladite porte comprenant un dormant solidaire du bâti dudit véhicule, ou bien solidaire dudit quai, ainsi qu'au moins un vantail (60, 70) tel que défini ci-dessus, monté mobile par rapport audit dormant.

L'invention a également pour objet un véhicule de transport, notamment du type train, tramway, métro, bus ou encore trolleybus, comprenant au moins une porte telle que définie ci-dessus.

L'invention a également pour objet un quai d'arrêt d'un véhicule de transport, notamment du type train, tramway, métro, bus ou encore trolleybus, comprenant au moins une porte telle que définie ci-dessus.

### Description des figures

L'invention va être décrite ci-après, en référence aux dessins annexés, donnés uniquement à titre d'exemples non limitatifs, dans lesquels :
La figure 1 est une vue schématique de face, illustrant une porte de véhicule de transport dont chaque vantail est équipé d'un ensemble de signalisation conforme à l'invention.
La figure 2 est une vue de dessus, à plus grande échelle, illustrant un joint appartenant à l'ensemble de signalisation conforme à l'invention, ainsi qu'un profilé appartenant au vantail de la porte de la figure 1, dans lequel doit être logé ce joint.
La figure 3 est une vue de dessus, analogue à la figure 2, illustrant le joint logé dans le profilé.
La figure 4 est une vue de dessus, analogue à la figure 3, illustrant en outre une clé de verrouillage équipée d'un organe d'éclairage, laquelle est reçue dans un volume intérieur de ce joint.
La figure 5 est une vue de face, illustrant plus particulièrement l'organe d'éclairage de la figure 4.
La figure 6 est une vue de dessus, illustrant une variante de montage de l'élément de signalisation sur la clé de verrouillage.
Les figures 7 à 12 sont des vues de dessus, analogue à la figure 4, illustrant six variantes de réalisation de l'ensemble de signalisation conforme à l'invention.

Les repères numériques suivants sont utilisés dans les dessins :

| | | | |
|---|---|---|---|
| 50 | Porte | 60,70 | Vantaux |
| 80 | Dormant | 90 | Baie |
| 62,72 | Corps de 70 | 63,73 | Vitre |
| 64,74 | Bouton-poussoir | 66,76 | Cadre de 70 |
| 1,1' | Profilé | 10 | Ame de 1 |
| 11,12 | Ailes de 1 | P60 | Plan principal de 60 |
| 14 | Logement de 1 | 16,17 | Arêtes de 1 |
| 18,19 | Tôles | X1 X1 | Direction longitudinale |
| Y1 Y1 | Direction transversale | | |
| 2 | Joint | 20 | Embase de 2 |
| 20',21' | Parois internes de 20,21 | 21 | Région d'accrochage de 2 |
| 22,23 | Pattes de 2 | 22',23' | Branche intermédiaire de 22,23 |
| 22",23" | Branche terminale de 22,23 | 24,25 | Nervures de 2 |
| 26,27 | Canaux d'accrochage de 2 | 28 | Volume intérieur de 2 |
| 29 | Espace de déformation de 28 | 20a | Embase de 1' |
| 3 | Clé de verrouillage | 30 | Pied de 3 |
| 31,32 | Ergots de 30 | 34 | Tige de 3 |
| 35 | Tête de 3 | 36 | Pourtour de 35 |
| 38 | Rebords de 3 | 39 | Glissière de 3 |
| 4 | Organe d'éclairage | 40 | Support de 4 |
| 42 | Diodes de 4 | 44 | Orifices de 40 |
| F2,F'2 | Déplacements du joint 2 | F22,F23 | Rapprochement des pattes 22,23 |
| F'22,F'23 | Eloignement des pattes 22,23 | Figure 7 | Mêmes numéros +100 |
| Figure 8 | Mêmes numéros +200 | Figure 9 | Mêmes numéros +300 |
| Figure10 | Mêmes numéros +400 | Figure11 | Mêmes numéros +500 |
| 410' | Capot | 414' | Logement secondaire |
| 410" | Orifice de 410' | 534' | Extrémité libre de 534 |
| Figure12 | Mêmes numéros +600 | 634' | Extrémité libre de 634 |

### Description détaillée de l'invention

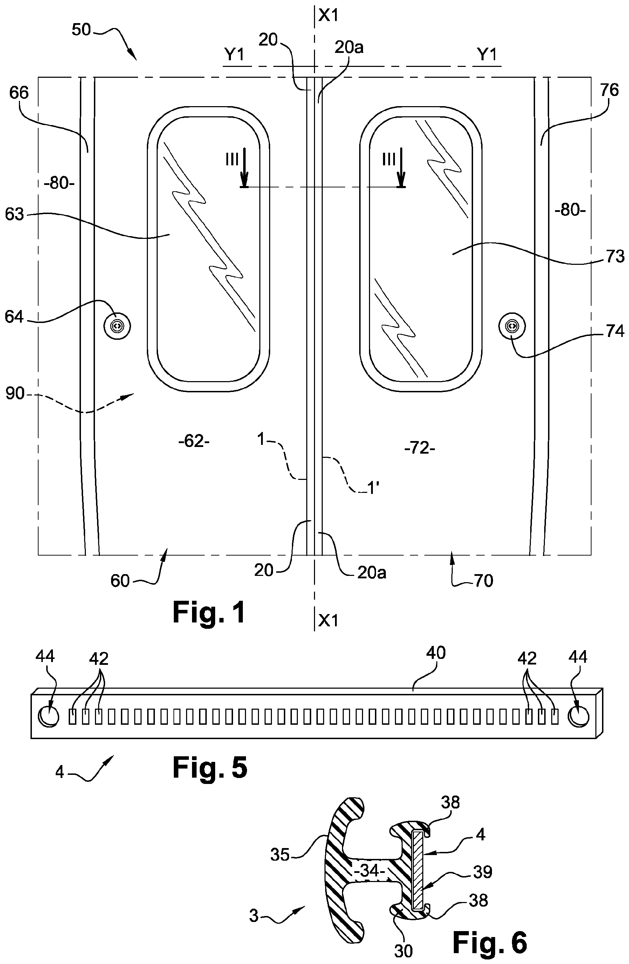

La figure 1 annexée illustre une porte, désignée dans son ensemble par la référence 50, qui équipe un véhicule de transport. Cette porte comprend, de manière habituelle, un ouvrant formé par deux vantaux 60 et 70, ainsi qu'un dormant 80 représenté de manière schématique, lequel est disposé à la périphérie d'une baie 90 ménagée dans la caisse de ce véhicule. Cette porte peut être munie de deux vantaux comme dans l'exemple illustré, mais aussi d'un unique vantail.

Dans l'exemple illustré, la porte équipe un train du type métro. L'invention trouve cependant son application à des portes destinées à équiper d'autres véhicules de transport tels que notamment des tramways, des trolleybus, ou encore des trains différents de celui mentionné ci-dessus. Dans ce qui suit, on suppose que les vantaux sont verticaux, notamment en référence à la figure 1. Par ailleurs, les termes « intérieur » et « extérieur » sont utilisés en référence à la caisse de ce véhicule de transport.

Chaque vantail 60, 70 comprend, de manière connue, un corps central 62, 72 équipé notamment d'une vitre 63, 73 et d'un organe de manœuvre 64, 74, par exemple du type bouton-poussoir. Ce corps est typiquement formé de deux parements opposés respectivement intérieur et extérieur, ainsi que d'une âme intercalée entre ces parements. Par ailleurs, un cadre 66, 76 s'étend à la périphérie extérieure de ce corps. Ce cadre comprend notamment un profilé, qui est de type connu en soi, prévu sur les bords verticaux du corps. On va maintenant décrire la structure du profilé 1 équipant le vantail 60, étant entendu que l'autre vantail 70 possède un profilé 1' de structure identique, illustré de manière très schématique sur la figure 1.

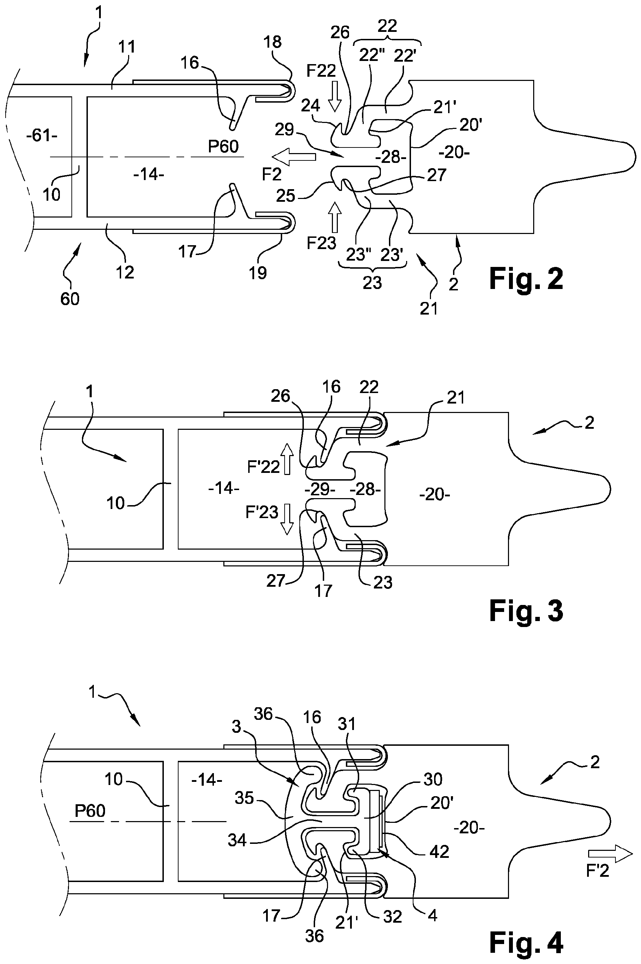

Comme le montrent notamment les figures 2 à 4, ce profilé 1 comporte une âme 10, ainsi que deux ailes 11 et 12 s'étendant parallèlement au plan principal P60 du vantail. Cette âme 10 et ces deux ailes 11 et 12 définissent un logement 14 sensiblement en forme de U, ouvert à l'opposé de ce corps. Par ailleurs, deux arêtes 16 et 17 font saillie l'une en direction de l'autre, à partir d'une aile respective. Comme on le verra dans ce qui suit, ces arêtes assurent une fonction d'accrochage d'un joint. Enfin chaque aile est recouverte, au moins en partie, par une tôle respective 18 et 19, formant les parois intérieure et extérieure du vantail. Sur la figure 1, on définit une direction X1-X1 dite longitudinale, en référence à la direction principale du joint, et une direction Y1-Y1 dite transversale, en référence à cette direction principale. Sur cette figure 1, les directions X1-X1 et Y1-Y1 sont respectivement globalement verticale et globalement horizontale.

On va maintenant décrire, en référence notamment aux figures 2 à 5, un ensemble de signalisation conforme à l'invention. Ce dernier comprend essentiellement :
- un joint translucide, désigné dans son ensemble par la référence 2
- une clé de verrouillage, désignée dans son ensemble par la référence 3 ; et
- un organe d'éclairage équipé de diodes électroluminescentes, désigné dans son ensemble par la référence 4.

Le joint 2 est réalisé en tout matériau approprié, lui permettant d'assurer ses fonctions principales, à savoir son accrochage sur le profilé 1, le renvoi de la lumière émise par les diodes, l'étanchéité à l'eau et la détection d'obstacles. De manière constructive, on utilisera typiquement un joint translucide, réalisé notamment en silicone. À titre de variante, on pourra choisir d'autres matériaux, tels qu'un PVC souple, un Thermoplastique Elastomère (TPE), un polyuréthane, ou tout autre matériau approprié.

Ce joint 2 comprend tout d'abord une embase massive 20 destinée à faire saillie en dehors du logement 14, de manière à constituer une région d'éclairage du joint. Cette embase se prolonge par une région d'accrochage 21, destinée à être logée dans le volume intérieur du logement précité. Dans l'exemple illustré, cette région d'accrochage est une région d'encliquetage élastique. Cette région 21 comprend deux pattes 22 et 23, en forme de L, lesquelles comprennent des branches intermédiaires mutuellement parallèles 22' et 23', ainsi que des branches d'extrémité 22" et 23" faisant saillie l'une vers l'autre. Ces dernières sont prolongées par des nervures 24 et 25, faisant saillie à l'opposé l'une de l'autre.

Ces nervures définissent, avec les pattes précitées, des canaux d'accrochage 26 et 27 destinés à coopérer avec les arêtes 16 et 17 du profilé. L'embase 20 et la région d'accrochage 21 délimite un volume intercalaire 28, bordé par des parois 20' et 21' appartenant respectivement à cette embase 20 et cette région d'accrochage 21. Ce volume intercalaire, qui est destiné à la réception de la clé 3, est ouvert à l'opposé de l'embase 20 de manière à former un espace de déformation 29. Le joint 2 s'étend sur au moins une partie substantielle de la hauteur du vantail et, de manière préférée, sur sensiblement toute cette hauteur. Le volume intercalaire 28 débouche au moins à une extrémité longitudinale du joint, en particulier à son extrémité supérieure. De manière préférée, ce volume 28 occupe l'intégralité du joint, de sorte qu'il débouche aux deux extrémités longitudinales de ce dernier.

La clé 3 comprend tout d'abord un pied 30, destiné à être reçu dans le volume 28. Ce pied est pourvu de deux ergots 31 et 32, coopérant avec les faces en regard des deux pattes 22 et 23. Ce pied se prolonge par une tige 34, s'étendant à l'intérieur de l'espace de déformation 29 selon le plan principal P60. Cette tige est terminée par une tête bombée 35, dont la concavité est tournée vers le pied 30. La tête 35 possède un pourtour périphérique 36, propre à venir en appui contre les arêtes du profilé.

Cette clé 3 est réalisée en un matériau qui lui confère une résistance mécanique suffisante pour bloquer le joint 2, à l'encontre d'efforts visant à extraire ce dernier hors du logement 14 du profilé 1. Le matériau constitutif de la clé est également adapté, pour permettre à cette dernière d'assurer une fonction de support pour l'organe d'éclairage qui va être décrit ci-dessous. Dans cet esprit, on pourra notamment choisir une clé réalisée en un matériau plastique, qui peut être adapté à tous types de vantaux, en particulier des vantaux galbés.

Cette clé peut également être réalisée en un matériau apportant une fonction supplémentaire de dissipation thermique de la chaleur, générée en service par l'organe d'éclairage. À cet égard, on pourra choisir une clé réalisée en aluminium ou en un matériau analogue. On notera cependant que ce type de matériau est moins bien adapté qu'une matière plastique, pour des vantaux galbés.

La clé 3 s'étend sur au moins une partie substantielle de la hauteur du joint 2 et, de manière préférée, sur sensiblement toute cette hauteur. Néanmoins, il convient d'éviter que cette clé 3 ne fasse saillie longitudinalement par rapport au joint 2, une fois l'ensemble de signalisation selon l'invention monté sur le vantail 60. En effet un tel dépassement longitudinal de la clé serait susceptible de gêner le bon fonctionnement du vantail. On prévoit donc avantageusement un moyen d'immobilisation qui empêche que cette clé ne puisse glisser longitudinalement, en dehors du volume intérieur du joint.

A cet effet, un ou plusieurs moyens d'immobilisation peuvent être utilisés, seuls ou en combinaison. De préférence ces moyens d'immobilisation sont des moyens amovibles ou réversibles, à savoir qu'ils peuvent être démontés sans risque d'endommager la clé ou le joint. A titre d'exemple, on peut fixer un bouchon à chaque extrémité du joint, obstruant ainsi le débouché du volume intérieur 28. On peut aussi coller la clé contre la paroi interne de du volume intérieur 28, par exemple à l'aide d'un colle souple épaisse de type polyuréthane. On peut également mettre en place un axe dans le plan horizontal, empêchant la translation de la clé suivant l'axe vertical : cet axe peut notamment être une goupille ou une vis. On peut également mettre en place une vis, non représentée, reliant le joint à la clé; cette vis peut par exemple être auto-taraudeuse dans le matériau de la clé.

Enfin l'organe d'éclairage 4 comprend tout d'abord un corps allongé 40, formant support. Ce corps est réalisé en un matériau qui lui confère une tenue mécanique suffisante, de sorte qu'il peut être fixé contre la clé. De manière typique, ce corps est formé par un PCB (Printed Circuit Board, ou Circuit Imprimé), de type connu en soi. Ce corps 40 est équipé d'une pluralité d'éléments d'éclairage, qui sont des diodes électroluminescentes 42 dans l'exemple illustré. Le nombre de ces diodes, lesquelles sont de type connu en soi, est par exemple compris entre 20 et 600. Ces diodes sont commandées de manière classique, par l'intermédiaire de moyens de commande non représentés, de type connu en soi. Comme le montre notamment la figure 4, les diodes 42 sont disposées au voisinage de la région d'éclairage 20, en étant tournées vers la paroi en regard 20' appartenant à cette dernière.

L'organe d'éclairage 4 s'étend sur au moins une partie substantielle de la hauteur de la clé 3 et, de manière préférée, sur sensiblement toute cette hauteur. Cet organe 4 est monté sur la clé 3 grâce à des moyens de fixation, qui peuvent être utilisés seuls ou en combinaison mutuelle.

Dans l'exemple de la figure 5, deux orifices 44 sont prévus aux extrémités opposées du corps 40, de manière à permettre le vissage de ce corps sur le pied 30 de la clé 3. À titre de variante non représentée, on peut également prévoir que le corps 40 est collé contre la face en regard de ce pied 30.

La figure 6 illustre une variante supplémentaire, dans laquelle le pied 30 est prolongé par deux rebords 38, lesquelles définissent une glissière 39. Cette dernière permet une insertion longitudinale de l'organe d'éclairage 4, tout en assurant sa retenue selon une direction transversale

Le montage du joint 2 et de la clé 3, sur le profilé 1, va maintenant être décrit. En théorie on peut introduire le joint 2 dans le profilé 1 selon une direction longitudinale, à savoir parallèle à celle X1-X1 de la figure 1. Néanmoins, cette solution n'est pas préférée car elle n'offre pas une commodité de montage satisfaisante. De façon préférée, en référence à la figure 2, on déplace tout d'abord le joint 2 en direction du profilé, selon la flèche F2 correspondant à une direction transversale parallèle à la direction Y1-Y1 de la figure 1.

Lorsque le joint vient en contact des arêtes 16 et 17, les pattes 22 et 23 se rapprochent mutuellement selon les flèches F22 et F23. De la sorte, ces pattes progressent vers le fond du logement, puis s'éloignent à nouveau mutuellement du fait de leur nature élastique selon les flèches F'22 et F'23 (voir figure 3). Dans cette configuration, les arêtes 16 et 17 pénètrent dans les canaux 26 et 27. On notera cependant que, à ce stade, les pattes n'offrent pas une résistance mécanique suffisante pour empêcher un arrachement du joint, selon la direction F2. À cet égard, cette faible résistance mécanique des pattes permet un déplacement aisé du joint entre les configurations des figures 2 et 3, sans effort physique substantiel pour l'opérateur.

Une fois que le joint 2 est solidarisé sur le profilé 1 dans la position sensiblement définitive qu'il doit adopter, on introduit, dans le volume intérieur 28 de ce joint, la clé de verrouillage 3 et l'organe d'éclairage 4 qui est monté sur cette dernière. Cette introduction est typiquement réalisée de manière longitudinale, à savoir selon la direction X1-X1 de la figure 1. Lorsque la clé 3 se trouve dans la position voulue, on l'immobilise avantageusement par rapport au joint, grâce aux moyens d'immobilisation décrits ci-dessus.

La configuration fonctionnelle de l'ensemble de signalisation, conforme à l'invention, est illustrée sur la figure 4. Cette dernière montre que les différentes diodes 42 sont placées au plus près de la région lumineuse du joint, ce qui confère une grande visibilité à l'information émise à l'attention des voyageurs. À cet égard, cette région lumineuse 20 et le profilé 1 sont représentés sur la figure 1, tout comme la région lumineuse 20a et le profilé 1' associés à l'autre vantail 70.

Dans cette configuration fonctionnelle, la présence de la clé 3 confère en outre au joint 2 une résistance élevée, vis-à-vis d'un arrachement selon la direction transversale Y1-Y1. En effet, le pourtour 36 de la tête de cette clé 3 vient en appui direct contre les arêtes 16 et 17, de manière à s'opposer à un tel arrachement. Par ailleurs, les parois en regard du pied 30 et du volume intérieur 28 du joint délimitent des zones de contact mutuel de surface importante, qui fournissent une résistance supplémentaire à l'encontre d'un tel arrachement.

Si on souhaite désolidariser l'ensemble de signalisation conforme à l'invention, par rapport au joint 2, on enlève tout d'abord les moyens permettant l'immobilisation de la clé par rapport à ce joint. Puis, on retire cette clé selon la direction longitudinale X1-X1. Enfin, on extrait le joint 2 hors du logement défini par le profilé 1. En théorie, cette opération peut être réalisée selon la direction longitudinale. Néanmoins, de manière préférée, on exerce sur le joint une force transversale selon la flèche F'2 de la figure 4, opposée à celle matérialisée par la flèche F2 de la figure 2. Étant donné leur faible résistance mécanique, comme évoqué ci-dessus, les pattes du joint ne s'opposent pas à une telle action. Cette dernière peut donc être mise en œuvre par l'utilisateur de façon simple et rapide, sans exercer un effort physique d'intensité élevée.

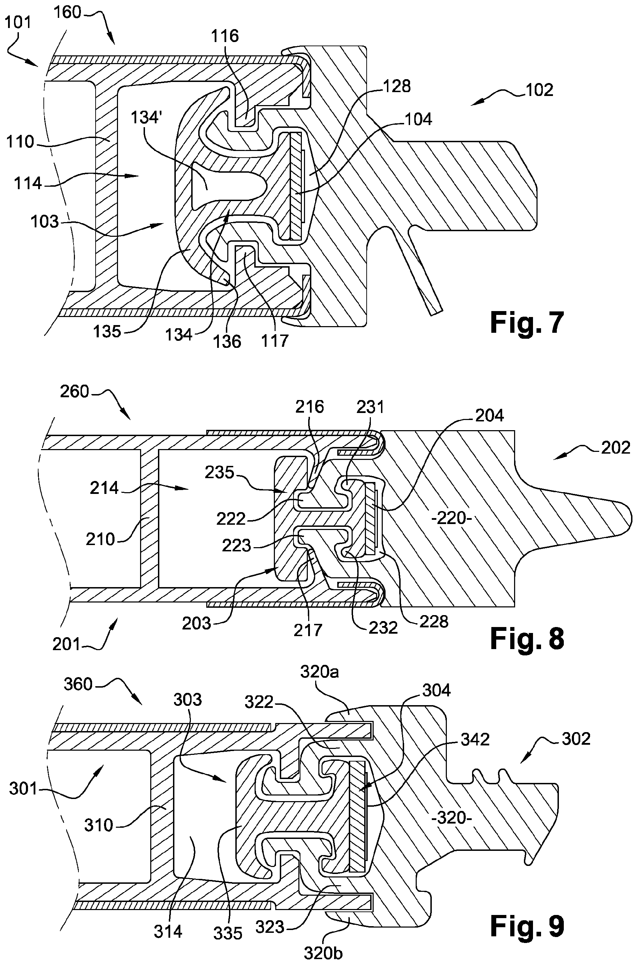

La figure 7 illustre une première variante de l'ensemble de signalisation, conforme à l'invention. Sur cette figure 7, les éléments mécaniques analogues à ceux des figures 2 à 4 y sont affectés des mêmes numéros de référence, augmentés de 100. L'ensemble de signalisation de cette figure 7 diffère essentiellement de celui des figures 2 à 4, en ce que la tige 134 de la clé 103 est creusée d'une échancrure centrale 134'. Cela permet de maintenir une épaisseur à peu près constante, pour éviter les problèmes de retassures. Par ailleurs cette clé est de forme massive, ce qui est un avantage pour la dissipation thermique, si cette clé est réalisée en un matériau tel que l'aluminium.

La figure 8 illustre une deuxième variante de l'ensemble de signalisation, conforme à l'invention. Sur cette figure 8, les éléments mécaniques analogues à ceux des figures 2 à 4 y sont affectés des mêmes numéros de référence, augmentés de 200. L'ensemble de signalisation de cette figure 8 diffère essentiellement de celui des figures 2 à 4, en ce que les pattes 222 et 223 sont dépourvues de nervures, telles que celles 24 et 25 du premier mode de réalisation. Dans ces conditions, la partie d'accrochage n'est pas encliquetée sur les arêtes 216 et 217, mais simplement ajustée par coincement entre celles-ci. La fixation du joint est assurée par la clé 203, en particulier ses ergots 231 et 232 et sa tête 235 qui coiffe les pattes précitées 222 et 223, tout en venant en butée contre les arêtes 216 et 217. Ce mode de réalisation est tout particulièrement bien adapté à des encombrements réduits.

La figure 9 illustre une troisième variante de l'ensemble de signalisation, conforme à l'invention. Sur cette figure 9, les éléments mécaniques analogues à ceux des figures 2 à 4 y sont affectés des mêmes numéros de référence, augmentés de 300. L'ensemble de signalisation de cette figure 9 diffère essentiellement de celui des figures 2 à 4, en ce que le vantail 360 présente une épaisseur plus faible, typiquement voisine de 25 millimètres. On note que la région lumineuse 320 est prolongée par deux languettes 320a et 320b, lesquelles coiffent les bords libres du profilé 301 à l'opposé des pattes 322 et 323.

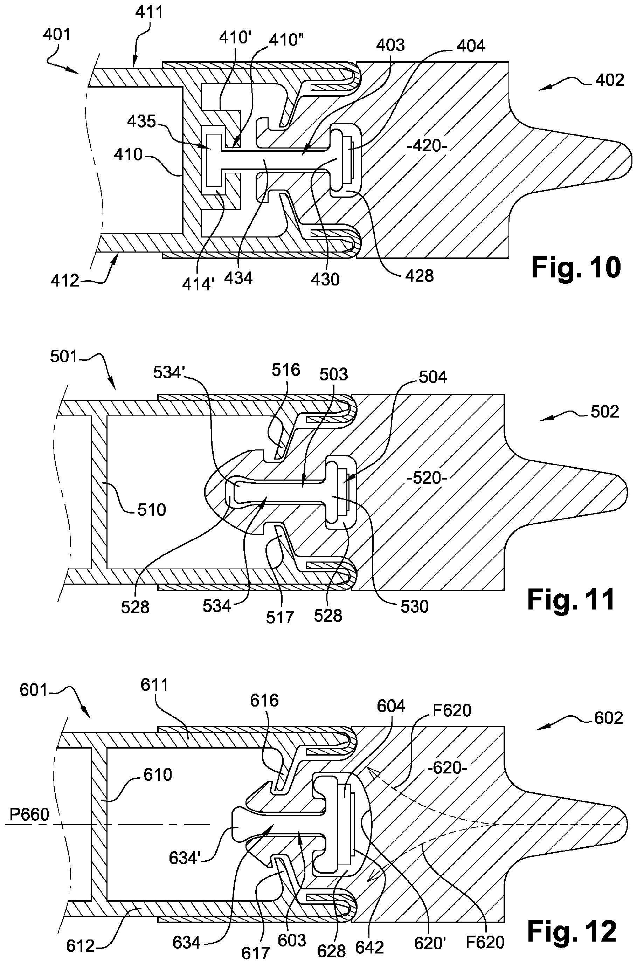

La figure 10 illustre une quatrième variante de l'ensemble de signalisation, conforme à l'invention. Sur cette figure 10, les éléments mécaniques analogues à ceux des figures 2 à 4 y sont affectés des mêmes numéros de référence, augmentés de 400. L'ensemble de signalisation de cette figure 10 diffère essentiellement de celui des figures 2 à 4, en ce que l'âme 410 du profilé 401 est munie d'un capot 410', délimitant un espace 414' ou logement secondaire. Ce dernier communique avec le logement principal 414 par un orifice 410" du capot, par lequel pénètre la tige 434 de la clé 403, de sorte que la tête 435 de la clé peut être reçue dans l'espace secondaire 414'. En cas d'effort de traction subi par le joint, la tête 435 de la clé 403 vient en butée contre les faces internes en regard du capot 410', de sorte que la clé s'oppose à l'arrachement de ce joint.

La figure 11 illustre une cinquième variante de l'ensemble de signalisation, conforme à l'invention. Sur cette figure 11, les éléments mécaniques analogues à ceux des figures 2 à 4 y sont affectés des mêmes numéros de référence, augmentés de 500. L'ensemble de signalisation de cette figure 11 diffère essentiellement de celui des précédentes figures, en ce que le volume intercalaire 528 du joint 502 est fermé en vue transversale. Dans ces conditions, la clé 503 est entièrement logée dans ce volume 528, sans faire saillie en dehors de ce dernier. Par ailleurs, cette clé est dépourvue de tête. En revanche l'extrémité libre 534' de sa tige 534 est évasée de manière à éviter tout affaissement du joint 502, au niveau de sa région en contact avec les arêtes 516 et 517.

La figure 12 illustre une sixième variante de l'ensemble de signalisation, conforme à l'invention. Sur cette figure 12, les éléments mécaniques analogues à ceux des figures 2 à 4 y sont affectés des mêmes numéros de référence, augmentés de 600. Tout comme la clé 503 du mode de réalisation de la figure 11, la clé 603 de ce mode de réalisation est dépourvue de tête. Par ailleurs l'extrémité libre 634' de la tige 634 est évasée de manière à éviter tout affaissement du joint 602, au niveau de sa région en contact avec les arêtes 616 et 617. En revanche, le volume intercalaire 628 du joint 602 est ouvert en vue transversale, de sorte que cette extrémité libre fait légèrement saillie en dehors de ce volume 628.

Par ailleurs la paroi 620' de l'embase 620, bordant le volume intercalaire 628, est bombée. En d'autres termes, la distance entre cette paroi et les éléments d'éclairage 642 diminue, depuis la région médiane de cette paroi vers ses zones latérales. Cela permet de répartir les chocs exercés, selon le plan principal P660 du vantail, en direction des zones latérales précitées, comme cela est matérialisé par les flèches F620. De la sorte, les éléments d'éclairage 642 sont significativement protégés à l'encontre de tels chocs. A titre de variante, cette paroi 620' peut présenter toute forme équivalente à une forme bombée, notamment une forme arquée comme sur la figure 9, ou encore une forme de pointe.

L'ensemble de signalisation, conforme à l'invention, présente de nombreux avantages par rapport à l'art antérieur.

Tout d'abord l'invention permet de générer une intensité lumineuse, dans la région du joint à éclairer, qui est bien plus élevée que dans les solutions connues. En particulier, cette intensité lumineuse garantit une perception satisfaisante pour les utilisateurs, même lorsque le joint précité est exposé à la lumière naturelle, notamment au soleil. En effet, selon l'invention, les moyens d'éclairage sont logés dans un volume intérieur ménagé dans le joint, au plus près de la région lumineuse de ce dernier. Par conséquent, la distance séparant ces moyens d'éclairage et cette région lumineuse est réduite. De façon avantageuse aucun élément mécanique, susceptible d'interférer avec la lumière émise par les moyens d'éclairage, n'est interposé entre ces moyens d'éclairage et cette région lumineuse.

Par ailleurs, l'invention permet de faciliter le montage des moyens d'éclairage, en regard des solutions connues. En effet, ces moyens d'éclairage peuvent être fixés directement sur la clé de verrouillage, avant l'insertion de cette dernière dans le volume intérieur du joint. L'invention permet donc de s'affranchir d'éventuels problèmes d'accessibilité, liés à des moyens d'éclairage qui seraient montés au fond du logement du profilé. On notera que, selon l'invention, cette accessibilité n'est pas impactée dans le cas où le logement précité reçoit des équipements nécessaires au bon fonctionnement du vantail, tels que des câbles ou une tringlerie. La fixation préalable de ces moyens d'éclairage sur la clé réduit également les risques de détérioration, lors du montage.

En outre, l'invention garantit une maintenance des moyens d'éclairage qui est particulièrement commode. En effet, selon l'invention, les moyens d'éclairage peuvent être changés par une simple extraction de la clé de verrouillage, selon une direction longitudinale. Par conséquent, l'invention ne nécessite pas de désolidariser l'ensemble du joint, hors du logement du profilé.

De surcroît l'invention autorise un montage aisé du joint dans son logement, tout en garantissant un maintien en place fiable. Ainsi, comme on l'a vu ci-dessus, l'accrochage du joint sur le profilé peut être réalisé sans effort physique important de la part de l'opérateur. Par ailleurs, la présence de la clé de verrouillage permet un montage sûr, en particulier à l'encontre d'une extraction transversale de ce joint.

A cet égard, on notera que la présence de la tête 36, formant une région dite de butée de la clé, est tout particulièrement avantageuse. En effet, elle offre une résistance particulièrement fiable à l'encontre des efforts d'arrachement du joint. L'invention trouve également son application à un ensemble d'étanchéité, qui est dépourvu de moyens d'éclairage, lequel ensemble comprend un joint et une clé de verrouillage intégrant une telle région de butée.

Enfin, selon une caractéristique avantageuse de l'invention, l'organe d'éclairage est intégré dans le volume global, formé par le vantail et le joint qui lui est associé. Sur la figure 2, ce volume est bordé par les ailes 11 et 12 du profilé 1, ainsi que par les faces respectivement intérieure et extérieure de l'embase 20. En d'autres termes, cet organe d'éclairage ne fait pas saillie latéralement, par rapport aux bords de ce vantail et de ce joint. Cela permet de protéger l'organe d'éclairage à l'égard de chocs, exercés selon un axe perpendiculaire au plan principal du vantail. A cet égard, on rappellera que la solution proposée par WO 2011/138292 n'est pas satisfaisante sur cet aspect, puisqu'elle prévoit de placer cet organe lumineux en applique sur le vantail.

## Revendications

1. Ensemble de signalisation (2, 3, 4) pour un vantail (60, 70) de porte (50) d'accès à un véhicule de transport, notamment ferroviaire, ledit vantail comportant un corps et un profilé (1, 1') s'étendant sur au moins une partie de la périphérie de ce corps, ledit profilé définissant un logement (14) ouvert à l'opposé dudit corps,
ledit ensemble de signalisation comprenant
- un joint (2), lequel joint comporte une région d'accrochage (21), destinée à être reçue au moins en partie dans ledit logement dudit profilé, ainsi qu'une région d'éclairage (20),
- des moyens d'éclairage (4), propres à éclairer ladite région d'éclairage dudit joint, de façon à émettre au moins un signal visuel, en particulier représentatif de l'état d'ouverture et/ou de fermeture de la porte,
**caractérisé en ce que** :
ledit ensemble comprend en outre au moins une clé de verrouillage (3) reçue au moins en partie dans un volume intérieur (28) dudit joint, ladite clé étant propre à empêcher un arrachement dudit joint hors dudit profilé selon une direction transversale (Y1-Y1), en référence à la direction principale dudit joint, les moyens d'éclairage (4) étant fixés sur ladite clé de verrouillage.

2. Ensemble selon la revendication 1, **caractérisé en ce que** ledit volume intérieur (28) est bordé par des faces appartenant respectivement à la région d'accrochage et à la région d'éclairage, lesdits moyens d'éclairage (4) étant tournés vers la face (20') de la région d'éclairage.

3. Ensemble selon la revendication 1 ou 2, **caractérisé en ce que** lesdits moyens d'éclairage comprennent au moins un organe d'éclairage (4), lequel comprend un support (40) et des éléments d'éclairage (42) portés par ce support (40).

4. Ensemble selon la revendication 3, **caractérisé en ce que** lesdits éléments d'éclairage sont de type diodes électroluminescentes.

5. Ensemble selon l'une des revendications précédentes, **caractérisé en ce qu'**il comprend des moyens de fixation, permettant la fixation des moyens d'éclairage sur ladite clé de verrouillage.

6. Ensemble selon la revendication précédente, caractérisé en ce lesdits moyens de fixation comprennent des moyens de fixation amovible, notamment par vissage, et/ou des moyens de fixation par collage, et/ou des moyens de fixation par coopération de formes, notamment une glissière (39) dont est équipée la clé, présentant des rebords (38) de retenue de l'organe d'éclairage (4).

7. Ensemble selon l'une des revendications précédentes, **caractérisé en ce qu'**une partie (36) de ladite clé de verrouillage (3) fait saillie en dehors du volume intérieur (28), de manière à venir en contact direct avec ledit profilé (1).

8. Ensemble selon la revendication précédente, **caractérisé en ce que** ladite clé de verrouillage comprend un pied (30) et une tige (34) logés dans le volume intérieur, ainsi qu'une tête (35) faisant saillie en dehors du volume intérieur, de manière à venir en contact direct avec ledit profilé (1), ladite partie (36) en saillie en dehors du volume intérieur (28), notamment ladite tête (35), étant de préférence propre à venir en contact direct avec des arêtes (16, 17) s'étendant à partir des ailes dudit profilé (1).

9. Ensemble selon l'une des revendications 1 à 6, **caractérisé en ce qu'**une partie (435) de ladite clé de verrouillage (403) fait saillie en dehors du volume intérieur (428), de manière à venir en contact direct avec des parois d'un capot (410'), s'étendant à partir d'une âme (410) dudit profilé (401).

10. Ensemble selon l'une des revendications précédentes, **caractérisé en ce que** la distance entre la paroi (620') de la région d'éclairage (620), bordant le volume intercalaire (628), et les éléments d'éclairage (642) diminue, depuis la région médiane de cette paroi vers ses zones latérales, de manière à répartir les chocs exercés, selon le plan principal du vantail, en direction desdites zones latérales.

11. Ensemble selon l'une des revendications précédentes, **caractérisé en ce que** les moyens d'éclairage (4) sont intégrés dans le volume global, formé par le vantail (60) et le joint (2), de manière à protéger les moyens d'éclairage (4) à l'égard de chocs, exercés selon un axe perpendiculaire au plan principal (P60) du vantail.

12. Vantail (60, 70) de porte d'accès à un véhicule de transport, notamment ferroviaire, comprenant un corps (62, 72) et un cadre (66, 76) s'étendant sur au moins une partie de la périphérie dudit corps, ledit cadre comprenant au moins un profilé (1, 1') définissant un logement (14) ouvert à l'opposé dudit corps, ledit vantail comprenant en outre au moins un ensemble de signalisation selon l'une des revendications précédentes, la région d'accrochage (21) du joint étant reçue au moins en partie dans ledit logement.

13. Porte d'accès à un véhicule de transport, notamment du type train, tramway, métro ou encore trolleybus ou bus, en particulier porte dudit véhicule de transport, ou bien porte palière pour quai d'arrêt dudit véhicule de transport, ladite porte comprenant un dormant solidaire du bâti dudit véhicule, ou bien solidaire dudit quai, ainsi qu'au moins un vantail (60, 70) conforme à la revendication précédente, monté mobile par rapport audit dormant.

14. Véhicule de transport, notamment du type train, tramway, métro, bus ou encore trolleybus, comprenant au moins une porte conforme à la revendication précédente.

15. Quai d'arrêt d'un véhicule de transport, notamment du type train, tramway, métro, bus ou encore trolleybus, comprenant au moins une porte conforme à la revendication 13.

## Patentansprüche

1. Signalisierungseinheit (2, 3, 4) für einen Flügel (60, 70) einer Zugangstür (50) zu einem Transportfahrzeug, insbesondere einem Schienenfahrzeug, wobei der Flügel einen Körper und ein Profil (1, 1'), das sich über mindestens einen Teil des Umfangs dieses Körpers erstreckt, umfasst, wobei das Profil ein offenes Gehäuse (14) gegenüber dem Körper definiert,
wobei die Signalisierungseinheit umfasst
- eine Dichtung (2), wobei die Dichtung eine Eingriffsregion (21), die dazu vorgesehen ist, mindestens zum Teil in dem Gehäuse des Profils aufgenommen zu werden, sowie eine Beleuchtungsregion (20) umfasst,
- Beleuchtungsmittel (4), die dazu geeignet sind, die Beleuchtungsregion der Dichtung zu beleuchten, indem mindestens ein optisches Signal, insbesondere den Öffnungs- und/oder Schließzustand der Tür repräsentierend, abgegeben wird,
**dadurch gekennzeichnet, dass**:
die Einheit außerdem mindestens einen Verriegelungsschlüssel (3) umfasst, der mindestens zum Teil in einem Innenvolumen (28) der Dichtung aufgenommen wird, wobei der Schlüssel dazu geeignet ist, ein Abziehen der Dichtung von dem Profil entlang einer Querrichtung (Y1-Y1) in Bezug auf die Hauptrichtung der Dichtung zu verhindern, wobei die Beleuchtungsmittel (4) an dem Verriegelungsschlüssel befestigt sind.

2. Einheit nach Anspruch 1, **dadurch gekennzeichnet, dass** das Innenvolumen (28) durch Flächen umrandet ist, die jeweils zu der Eingriffsregion und der Beleuchtungsregion gehören, wobei die Beleuchtungsmittel (4) zu der Fläche (20') der Beleuchtungsregion hin gewandt sind.

3. Einheit nach Anspruch 1 oder 2, **dadurch gekennzeichnet, dass** die Beleuchtungsmittel mindestens ein Beleuchtungsorgan (4) umfassen, das einen Träger (40) und Beleuchtungselemente (42), die von diesem Träger (40) getragen werden, umfasst.

4. Einheit nach Anspruch 3, **dadurch gekennzeichnet, dass** die Beleuchtungselemente vom Leuchtdioden-Typ sind.

5. Einheit nach einem der vorhergehenden Ansprüche, **dadurch gekennzeichnet, dass** sie Befestigungsmittel umfasst, die die Befestigung von Beleuchtungsmitteln an dem Verriegelungsschlüssel ermöglichen.

6. Einheit nach dem vorhergehenden Anspruch, **dadurch gekennzeichnet, dass** diese Befestigungsmittel abnehmbare Befestigungsmittel, insbesondere durch Verschraubung, und/oder Befestigungsmittel durch Verklebung und/oder Befestigungsmittel durch Formschlüssigkeit, insbesondere eine Gleitschiene (39), mit der der Schlüssel ausgestattet ist, Ränder (38) zum Zurückhalten des Beleuchtungsorgans (4) aufweisend, umfassen.

7. Einheit nach einem der vorhergehenden Ansprüche, **dadurch gekennzeichnet, dass** ein Teil (36) des Verriegelungsschlüssels (3) außerhalb des Innenvolumens (28) hervorsteht, um in direkten Kontakt mit dem Profil (1) zu kommen.

8. Einheit nach dem vorhergehenden Anspruch, **dadurch gekennzeichnet, dass** der Verriegelungsschlüssel einen Fuß (30) und einen Schaft (34), die in dem Innenvolumen untergebracht werden, sowie einen Kopf (35), der außerhalb des Innenvolumens hervorsteht, um in direkten Kontakt mit dem Profil (1) zu kommen, umfasst, wobei der Teil (36), der außerhalb des Innenvolumens (28) hervorsteht, insbesondere der Kopf (35), vorzugsweise dazu geeignet ist, in direkten Kontakt mit Stegen (16, 17) zu kommen, die sich von Flügeln des Profils (1) erstrecken.

9. Einheit nach einem der Ansprüche 1 bis 6, **dadurch gekennzeichnet, dass** ein Teil (435) des Verriegelungsschlüssels (403) außerhalb des Innenvolumens (428) hervorsteht, um in direkten Kontakt mit Wänden einer Kappe (410') zu kommen, die sich von einem Kern (410) des Profils (401) erstreckt.

10. Einheit nach einem der vorhergehenden Ansprüche, **dadurch gekennzeichnet, dass** der Abstand zwischen der Wand (620') der Beleuchtungsregion (620), die das Zwischenvolumen (628) umrandet, und den Beleuchtungselementen (642) von der Mittelregion dieser Wand zu ihren Seitenzonen abnimmt, um die entlang der Hauptebene des Flügels ausgeübten Stöße in Richtung der Seitenzonen zu verteilen.

11. Einheit nach einem der vorhergehenden Ansprüche, **dadurch gekennzeichnet, dass** die Beleuchtungsmittel (4) in das Gesamtvolumen integriert sind, das von dem Flügel (60) und der Dichtung (2) gebildet wird, um die Beleuchtungsmittel (4) gegenüber Stößen, die entlang einer zur Hauptebene (P60) des Flügels senkrechten Ebene ausgeübt werden, zu schützen.

12. Flügel (60, 70) einer Zugangstür zu einem Transportfahrzeug, insbesondere einem Schienenfahrzeug, umfassend einen Körper (62, 72) und einen Rahmen (66, 76), der sich über mindestens einen Teil des Umfangs des Körpers erstreckt, wobei der Rahmen mindestens ein Profil (1, 1') umfasst, das ein offenes Gehäuse (14) gegenüber dem Körper definiert, wobei der Flügel außerdem mindestens eine Signalisierungseinheit nach einem der vorhergehenden Ansprüche umfasst, wobei die Eingriffsregion (21) der Dichtung mindestens zum Teil in dem Gehäuse aufgenommen wird.

13. Zugangstür zu einem Transportfahrzeug, insbesondere vom Eisenbahn-, Straßenbahn-, U-Bahn- oder sogar Oberleitungsbus- oder Bus-Typ, insbesondere Tür des Transportfahrzeugs oder auch Schwenktür für eine Halteplattform des Transportfahrzeugs, wobei die Tür eine Türeinfassung, die fest mit dem Tragrahmen des Fahrzeugs verbunden ist oder auch fest mit der Plattform verbunden ist, sowie mindestens einen dem vorhergehenden Anspruch entsprechenden Flügel (60, 70), der beweglich an der Türeinfassung montiert ist.

14. Transportfahrzeug, insbesondere vom Eisenbahn-, Straßenbahn-, U-Bahn-, Bus- oder sogar Oberleitungsbus-Typ, umfassend mindestens eine dem vorhergehenden Anspruch entsprechende Tür.

15. Halteplattform eines Transportfahrzeugs, insbesondere vom Eisenbahn-, Straßenbahn-, U-Bahn-, Bus- oder sogar Oberleitungsbus-Typ, umfassend mindestens eine dem Anspruch 13 entsprechende Tür.

## Claims

1. Signaling assembly (2, 3, 4) for a door leaf (60, 70) of an access door (50) to a transport vehicle, in particular a rail vehicle, said door leaf comprising a body and a profile (1, 1') extending over at least one portion of the periphery of this body, said profile defining a housing (14) open opposite said body,
said signaling assembly comprising
- a seal (2), said seal comprises an attaching region (21), intended to be received at least partially in said housing of said profile, as well as a lighting region (20),
- means of lighting (4), able to illuminate said lighting region of said seal, in such a way as to emit at least one visual signal, in particular representative of the opened and/or closed state of the door,
**characterized in that**:
said assembly further comprises at least one locking key (3) received at least partially in an interior volume (28) of said seal, said key being able to prevent a pulling off of said seal outside of said profile along a transversal direction (Y1-Y1), in reference to the main direction of said seal, the means of lighting (4) being fixed on said locking key.

2. Assembly according to claim 1, **characterized in that** said interior volume (28) is bordered by faces that respectively belong to the attaching region and to the lighting region, said means of lighting (4) being turned towards the face (20') of the lighting region.

3. Assembly according to claim 1 or 2, **characterized in that** said means of lighting comprise at least one lighting member (4), which comprises a support (40) and lighting elements (42) carried by this support (40).

4. Assembly according to claim 3, **characterized in that** said lighting elements are of the light-emitting diode type.

5. Assembly according to one of the preceding claims, **characterized in that** it comprises means of fastening, making it possible to fasten the means of lighting onto said locking key.

6. Assembly according to the preceding claim, **characterized in that** said means of fastening comprise removable means of fastening, in particular by screwing, and/or means of fastening par collage, and/or means of fastening by cooperation of shapes, in particular a slider (39) with which the key is provided, having edges (38) for retaining the lighting member (4).

7. Assembly according to one of the preceding claims, **characterized in that** a portion (36) of said locking key (3) protrudes outside of the interior volume (28), in such a way as to come into direct contact with said profile (1).

8. Assembly according to the preceding claim, **characterized in that** said locking key comprises a foot (30) and a stem (34) housed in the interior volume, as well as a head (35) protruding outside of the interior volume, in such a way as to come into direct contact with said profile (1), said portion (36) protruding outside of the interior volume (28), in particular said head (35), preferably able to come into direct contact with edges (16, 17) extending from wings of said profile (1).

9. Assembly according to one of claims 1 to 6, **characterized in that** said portion (435) of said locking key (403) protrudes outside of the interior volume (428), so as to come into direct contact with walls of a cover (410'), extending from a core (410) of said profile (401).

10. Assembly according to one of the preceding claims, **characterized in that** the distance between the wall (620') of the lighting region (620), bordering the divider volume (628), and the lighting elements (642) decreases, from the median region of this wall to the lateral zones thereof, in such a way as to distribute the impacts exerted, along the main plane of the door leaf, in the direction of said lateral zones.

11. Assembly according to one of the preceding claims, **characterized in that** the means of lighting (4) are integrated into the global volume, formed by the door leaf (60) and the seal (2), in such a way as to protect the means of lighting (4) from impact, exerted along an axis perpendicular to the main plane (P60) of the door leaf.

12. Door leaf (60, 70) of an access door to a transport vehicle, in particular a rail vehicle, comprising a body (62, 72) and a frame (66, 76) extending over at least one portion of the periphery of said body, said frame comprising at least one profile (1, 1') defining a housing (14) open opposite said body, said door leaf further comprising at least one signaling assembly according to one of the preceding claims, the attaching region (21) of the seal being received at least partially in said housing.

13. Access door to a transport vehicle, in particular of the train, tramway, subway type or trolleybus or bus type, in particular the door of said transport vehicle, or a landing door for the stop platform of said transport vehicle, said door comprising a sash integral with the frame of said vehicle, or integral with said platform, as well as at least one door leaf (60, 70) in accordance with the preceding claim, mounted mobile with respect to said sash.

14. Transport vehicle, in particular of the train, tramway, subway, bus or trolleybus type, comprising at least one door in accordance with the preceding claim.

15. Stop platform for a transport vehicle, in particular of the train, tramway, subway, bus or trolleybus type, comprising at least one door in accordance with claim 13.
